# EUROPEAN PATENT SPECIFICATION

(11) **EP 3 676 787 B1**
(45) Date of publication and mention of the grant of the patent: **12.10.2022**
(21) Application number: 19810724.5
(22) Date of filing: 30.08.2019
(51) Int. Cl.: H04L 9/08, H04L 9/32

(54) **METHODS AND DEVICES FOR PROVIDING TRAVERSABLE KEY-VALUE DATA STORAGE ON BLOCKCHAIN**
VERFAHREN UND VORRICHTUNGEN ZUR BEREITSTELLUNG VON DURCHQUERBARER SCHLÜSSELWERTDATENSPEICHERUNG AUF EINER BLOCKCHAIN
PROCÉDÉS ET DISPOSITIFS DE FOURNITURE DE DONNÉES CLÉ-VALEUR POUVANT ÊTRE PARCOURUES SUR UNE CHAÎNE DE BLOCS

(43) Date of publication of application: 08.07.2020
(73) Proprietor: Advanced New Technologies Co., Ltd., George Town, Grand Cayman KY1-9008 (KY)
(72) Inventor: CHEN, Shenglong, Hangzhou, Zhejiang 311121 (CN)
(74) Representative: Goddar, Heinz J.
(86) International application number: PCT/CN2019/103809
(87) International publication number: WO 2019/228558

(56) References cited:
- WO-A2-2019/141289
- US-A1- 2019 251 124
- CHRISTOPHER D CLACK: "Design discussion on the ISDA Common Domain Model", ARXIV.ORG, CORNELL UNIVERSITY LIBRARY, 201 OLIN LIBRARY CORNELL UNIVERSITY ITHACA, NY 14853, 29 November 2017 (2017-11-29), XP081311040,
- No relevant documents disclosed

## Description

### TECHNICAL FIELD

The specification relates generally to computer technologies, and more particularly, to methods and devices for providing traversable key-value data storage on a blockchain.

### BACKGROUND

Blockchain systems, also known as distributed ledger systems (DLSs) or consensus systems, may enable participating entities to store data securely and immutably. Blockchain systems may include any DLSs, without referencing any particular use case, and may be used for public, private, and consortium blockchain networks. A public blockchain network is open for all entities to use the system and participate in the consensus process. A private blockchain network is provided for a particular entity, which centrally controls read and write permissions. A consortium blockchain network is provided for a select group of entities, which control the consensus process, and includes an access control layer.

A blockchain system is implemented using a peer-to-peer (P2P) network, in which the nodes communicate directly with each other, e.g., without the need of a fixed, central server. Each node in the P2P network may initiate communication with another node in the P2P network.

A blockchain system maintains one or more blockchains. A blockchain is a data structure for storing data, such as transactions, that may prevent tampering and manipulation of the data by malicious parties. The blockchain system may store data as key-value pairs. Each key-value pair may include a key and a value that can be retrieved using the key. For example, a user's financial account information may be stored as a key-value pair on the blockchain system. The key-value pair may include an account number as the key and a balance as the value. In this manner, the account number can be used as the key to retrieve the value indicating the balance of the user's financial account. However, if the user has multiple key-value pairs stored on the blockchain system, e.g., if the user has multiple financial accounts, it may become difficult for the blockchain system to traverse through all these key-value pairs. Therefore, there is a need for a method to improve the ability to traverse through key-value pairs stored on blockchain systems.

US 2019/0251124 A1 (Pan et al.) discloses techniques for traversing smart contract database through a logic map. In an example, a logic map for traversing a Merkle Patricia Tree (MPT) is provided, which comprises a plurality of types of key-value pairs. For instance, for a key-value pair (KVP) having a key "Alice" and a value "22", a series of KVPs is provided in the logic map. An index of keys for the accounts of all users is also generated.

WO2019/141289 A2 discloses a data traversal solution, which indexes data specified in smart contracts (e.g. key-value pairs specified therein) in a respective index. This index allows for quick retrieval of original keys of the accounts referred to in a smart contract.

CHRISTOPHER D. CLACK: "Design discussion on the ISDA Common Domain Model" (ARXIV.ORG, CORNELL UNIVERSITY LIBRARY, 29 November 2017) discusses key topics of an initiative from the International Swaps and Derivatives Association (ISDA) to establish a "Common Domain Model" (ISDA CDM) for derivative instruments.

### SUMMARY

According to the present invention there is provided a method, apparatus and media as defined in the independent claims. Preferred embodiments are described in the dependent claims. In one aspect of the specification, a computer-implemented method for providing traversable key-value data storage includes: receiving a first user-provided key-value pair for recordation on a storage system, the first user-provided key-value pair comprising a first user-provided key and a first user-provided value; assigning a first index to the first user-provided key-value pair; generating a first index-to-key key-value pair, the first index-to-key key-value pair having a key comprising the first index and a value comprising the first user-provided key; generating a first key-to-index key-value pair, the first key-to-index key-value pair having a key comprising the first user-provided key and a value comprising the first index; and storing the first user-provided key-value pair, the first index-to-key key-value pair, and the first key-to-index key-value pair on the storage system.

In another aspect, a device for providing traversable key-value data storage includes: one or more processors; and one or more computer-readable memories coupled to the one or more processors and having instructions stored thereon that are executable by the one or more processors to receive a first user-provided key-value pair for recordation on a storage system, the first user-provided key-value pair comprising a first user-provided key and a first user-provided value; assign a first index to the first user-provided key-value pair; generate a first index-to-key key-value pair, the first index-to-key key-value pair having a key comprising the first index and a value comprising the first user-provided key; generate a first key-to-index key-value pair, the first key-to-index key-value pair having a key comprising the first user-provided key and a value comprising the first index; and store the first user-provided key-value pair, the first index-to-key key-value pair, and the first key-to-index key-value pair on the storage system.

In still another aspect, a non-transitory computer-readable medium has stored therein instructions that, when executed by a processor of a device, cause the device to perform a method for providing traversable key-value data storage. The method includes: receiving a first user-provided key-value pair for recordation on a storage system, the first user-provided key-value pair comprising a first user-provided key and a first user-provided value; assigning a first index to the first user-provided key-value pair; generating a first index-to-key key-value pair, the first index-to-key key-value pair having a key comprising the first index and a value comprising the first user-provided key; generating a first key-to-index key-value pair, the first key-to-index key-value pair having a key comprising the first user-provided key and a value comprising the first index; and storing the first user-provided key-value pair, the first index-to-key key-value pair, and the first key-to-index key-value pair on the storage system.

### BRIEF DESCRIPTION OF THE DRAWINGS

The accompanying drawings, which are incorporated in and constitute a part of this specification, illustrate embodiments. In the following description, which refers to the drawings, the same numbers in different drawings represent the same or similar elements unless otherwise represented.
FIG. 1 is a schematic diagram of a blockchain system, according to an embodiment.
FIG. 2 is a schematic diagram of a computing device for implementing a node in a blockchain system, according to an embodiment.
FIG. 3 is a schematic diagram of a traversable key-value data storage solution, according to an embodiment.
FIG. 4 is a flow chart of a method for processing a request to traverse key-value pairs, according an embodiment.
FIG. 5 is a flow chart of a method for processing a request to retrieve a key-value pair, according an embodiment.
FIG. 6 is a flow chart of a method for processing a request to set an existing key-value pair, according an embodiment.
FIG. 7 is a flow chart of a method for processing a request to set a new key-value pair, according an embodiment.
FIG. 8 is a flow chart of a method for processing a request to delete a key-value pair, according an embodiment.
FIG. 9 is a flow chart of a method for processing a request to delete a key-value pair, according an embodiment.
FIG. 10 is a flow chart of a method for providing a traversable key-value data storage, according to an embodiment.
FIG. 11 is a block diagram of an apparatus for providing a traversable key-value data storage, according to an embodiment.

### DETAILED DESCRIPTION

Embodiments of the specification provide methods and devices for providing traversable key-value data storage on blockchains. The methods and devices utilize a key-value data structure supported by blockchain systems to provide a traversable key-value data storage solution. The methods and devices also support key-value data operations such as "get," "set," "delete," and "traverse." In some embodiments, the traversable key-value data storage solution may be provided as a library deployed on the blockchain system, allowing users to utilize the traversable key-value data storage solution through calls to the functions provided in the library. In some embodiments, the traversable key-value data storage solution may be embedded into programs such as smart contracts or the like written to carry out various types of transactions on the blockchain system.

Embodiments disclosed in the specification have one or more technical effects. In some embodiments, the methods and devices utilize a key-value data structure supported by blockchain systems to provide a traversable key-value data storage solution. This improves the usability of the key-value data structure. In some embodiments, the methods and devices utilize the key-value data structure to define relationships between multiple key-value pairs. This provides the key-value data structure the ability to track certain types of relationship between key-value pairs stored on blockchains. In some embodiments, the methods and devices support the utilization of the traversable key-value data storage solution in programs such as smart contracts or the like. This allows the blockchain system to be more user-friendly and to effectively traverse through key-value pairs stored on the blockchain system. Practically, the methods and devices allow blockchain systems to use the key-value data structure to support data operations such as "traverse," "get," "set," and "delete."

A blockchain is a data structure that stores data, e.g., transactions, in a way that the transactions may be immutable and subsequently verified. A blockchain includes one or more blocks. Each block is linked to a previous block immediately before it in the blockchain by including a cryptographic hash of the previous block. Each block also may include a timestamp, its own cryptographic hash, and one or more transactions. The transactions, which generally have already been verified by the nodes of the blockchain system, may be hashed and encoded into a data structure, such as a Merkle tree. In a Merkle tree, data at leaf nodes of the tree is hashed, and all hashes in each branch of the tree may be concatenated at a root of the branch. This process continues up the tree to the root of the entire tree, which stores a hash that is representative of all data in the tree. A hash purporting to be of a transaction stored in the tree can be quickly verified by determining whether it is consistent with the structure of the tree.

A blockchain system includes a network of computing nodes that manage, update, and maintain one or more blockchains. The network may be a public blockchain network, a private blockchain network, or a consortium blockchain network. For example, numerous entities, such as hundreds, thousands, or even millions of entities, can operate in a public blockchain network, and each of the entities operates at least one node in the public blockchain network. Accordingly, the public blockchain network can be considered a public network with respect to the participating entities. Sometimes, a majority of entities (nodes) must sign every block for the block to be valid and added to the blockchain of the blockchain network. Examples of public blockchain networks include particular peer-to-peer payment networks that leverage a distributed ledger, referred to as blockchain.

In general, a public blockchain network may support public transactions. A public transaction is shared with all of the nodes in the public blockchain network, and is stored in a global blockchain. A global blockchain is a blockchain replicated across all nodes, and all nodes are in perfect state consensus with respect to the global blockchain. To achieve consensus (e.g., agreement to the addition of a block to a blockchain), a consensus protocol is implemented in the public blockchain network. Examples of consensus protocols include proof-of-work (POW) (e.g., implemented in the some crypto-currency networks), proof-of-stake (POS), and proof-of-authority (POA).

In general, a private blockchain network may be provided for a particular entity, which centrally controls read and write permissions. The entity controls which nodes are able to participate in the blockchain network. Consequently, private blockchain networks are generally referred to as permissioned networks that place restrictions on who is allowed to participate in the network, and on their level of participation (e.g., only in certain transactions). Various types of access control mechanisms can be used (e.g., existing participants vote on adding new entities, a regulatory authority can control admission).

In general, a consortium blockchain network may be private among the participating entities. In a consortium blockchain network, the consensus process is controlled by an authorized set of nodes, one or more nodes being operated by a respective entity (e.g., a financial institution, insurance company). For example, a consortium of ten (10) entities (e.g., financial institutions, insurance companies) can operate a consortium blockchain network, each of which operates at least one node in the consortium blockchain network. Accordingly, the consortium blockchain network can be considered a private network with respect to the participating entities. In some examples, each entity (node) must sign every block in order for the block to be validated and added to the blockchain. In some examples, at least a sub-set of entities (nodes) (e.g., at least 7 entities) must sign every block in order for the block to be validated and added to the blockchain.

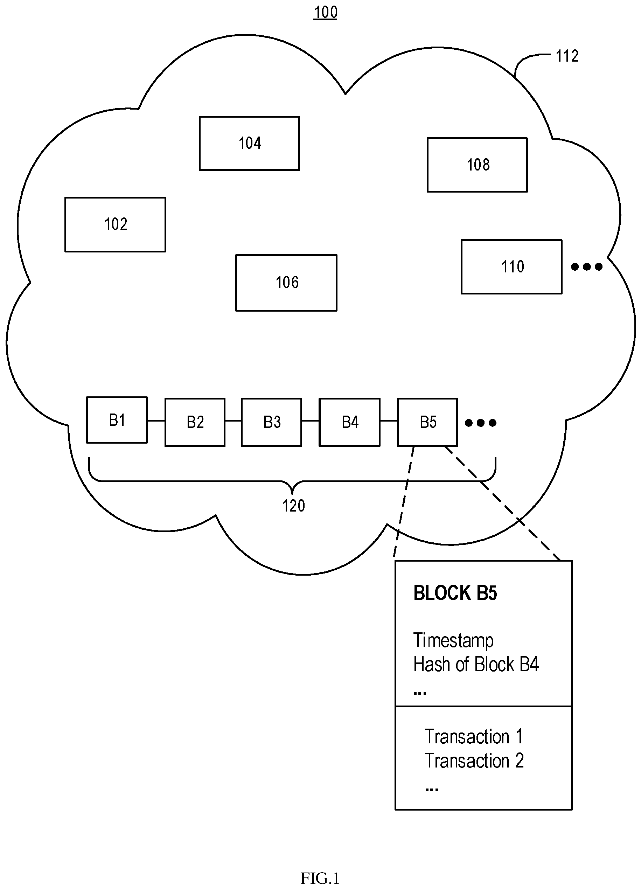

FIG. 1 illustrates a schematic diagram of a blockchain system 100, according to an embodiment. Referring to FIG. 1, the blockchain system 100 may include a plurality of nodes, e.g., nodes 102-110, configured to operate on a blockchain 120. The nodes 102-110 may form a network 112, such as a peer-to-peer (P2P) network. Each of the nodes 102-110 may be a computing device, such as a computer or a computer system, configured to store a copy of the blockchain 120, or may be software running on the computing device, such as a process or an application. Each of the nodes 102-110 may have a unique identifier.

The blockchain 120 may include a growing list of records in the form of data blocks, such as blocks B1-B5 in FIG. 1. Each of the blocks B1-B5 may include a timestamp, a cryptographic hash of a previous block, and data of the present block, which may be transactions such as monetary transactions. For example, as illustrated in FIG. 1, block B5 may include a timestamp, a cryptographic hash of block B4, and transaction data of block B5. Also, for example, a hashing operation may be performed on the previous block to generate the cryptographic hash of the previous block. The hashing operation may convert inputs of various lengths into cryptographic outputs of a fixed length through a hash algorithm, such as SHA-256.

The nodes 102-110 may be configured to perform an operation on the blockchain 120. For example, when a node, e.g., the node 102, wants to store new data onto the blockchain 120, that node may generate a new block to be added to the blockchain 120 and broadcast the new block to other nodes, e.g., the nodes 104-110, in the network 112. Based on legitimacy of the new block, e.g., validity of its signature and transactions, the other nodes may determine to accept the new block, such that the node 102 and the other nodes may add the new block to their respective copies of the blockchain 120. As this process repeats, more and more blocks of data may be added to the blockchain 120.

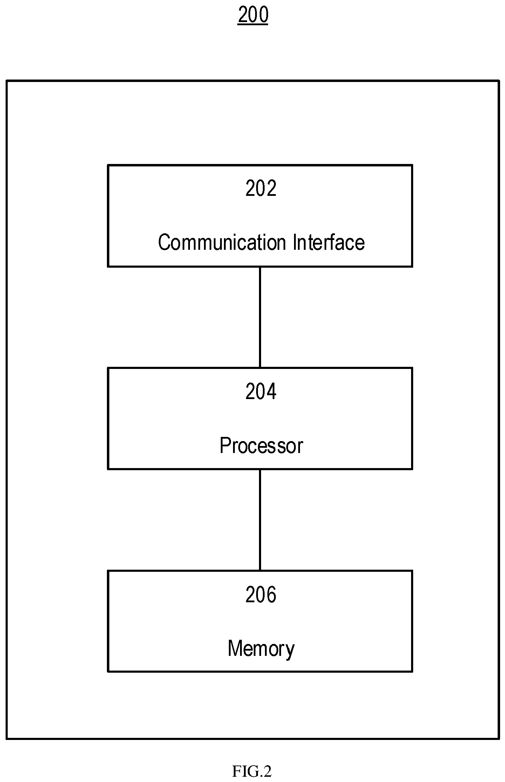

FIG. 2 illustrates a schematic diagram of a computing device 200 for implementing a node, e.g., the node 102 (FIG. 1), in a blockchain system, according to an embodiment. Referring to FIG. 2, the computing device 200 may include a communication interface 202, a processor 204, and a memory 206.

The communication interface 202 may facilitate communications between the computing device 200 and devices implementing other nodes, e.g., nodes 104-110 (FIG. 1), in the network. In some embodiments, the communication interface 202 is configured to support one or more communication standards, such as an Internet standard or protocol, an Integrated Services Digital Network (ISDN) standard, etc. In some embodiments, the communication interface 202 may include one or more of a Local Area Network (LAN) card, a cable modem, a satellite modem, a data bus, a cable, a wireless communication channel, a radio-based communication channel, a cellular communication channel, an Internet Protocol (IP) based communication device, or other communication devices for wired and/or wireless communications. In some embodiments, the communication interface 202 may be based on public cloud infrastructure, private cloud infrastructure, hybrid public/private cloud infrastructure.

The processor 204 may include one or more dedicated processing units, application-specific integrated circuits (ASICs), field-programmable gate arrays (FPGAs), or various other types of processors or processing units. The processor 204 is coupled with the memory 206 and is configured to execute instructions stored in the memory 206.

The memory 206 may store processor-executable instructions and data, such as a copy of the blockchain 120 (FIG. 1). The memory 206 may include any type of volatile or non-volatile memory devices, or a combination thereof, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, or a magnetic or optical disk. When the instructions in the memory 206 are executed by the processor 204, the computing device 200 may perform an operation on the blockchain 120.

Referring back to FIG. 1, the blockchain system 100 may operate according to one or more smart contracts. Each smart contract may be a computer protocol in the form of computer code that is incorporated into the blockchain 120, to facilitate, verify, or enforce the negotiation or performance of a contract. For example, a user of the blockchain system 100 may program agreed terms into a smart contract using a programming language, such as C++, Java, Solidity, Python, etc., and when the terms are met, the smart contract may be automatically executed by the blockchain system 100, e.g., to perform a transaction. Also for example, the smart contract may include a plurality of subroutines or functions, each of which may be a sequence of program instructions that performs a specific task. The smart contract may be operational code that is fully or partially executed without human interaction.

The blockchain system 100 with smart contracts may be used to record user financial information and conduct transactions including, e.g., money transfers. For example, information regarding an asset of a user and a corresponding value of that asset may be recorded on the blockchain system 100. Suppose that the user has an asset in the form of a bank account, and further suppose that the bank account has an account number of "AAAA" and a balance of "ZZZZ," a key-value pair indicating the existence of the asset and its corresponding value may be recorded on the blockchain system 100. Recording such key-value pairs on the blockchain system 100 may enable others to verify, e.g., whether the user has adequate resources to carry out certain transactions on the blockchain system 100.

In some embodiments, a "set" operation is provided to record a key-value pair on the blockchain system 100. The "set" operation may be invoked using a function call in the format of, e.g., set(key, value), in which the account number "AAAA" may be provided as the key and the balance "ZZZZ" may be provided as the value. If the key is new, meaning that the blockchain system 100 does not have a key-value pair established for account number "AAAA" yet, then the blockchain system 100 may record a new key-value pair "AAAA":"ZZZZ." If the key already exists, meaning that the blockchain system 100 already has a key-value pair with "AAAA" being the key, then the blockchain system 100 may update the value that corresponds to the key to reflect an updated balance.

In some embodiments, a "get" operation is provided to retrieve the value corresponding to a key. The "get" operation may be invoked using a function call in the format of, e.g., get(key). Continuing with the example above, the function call get("AAAA") may be used to retrieve the value "ZZZZ" recorded for the key "AAAA."

In some embodiments, a "delete" operation is provided to delete the value corresponding to a key. The "delete" operation may be invoked using a function call in the format of, e.g., delete(key). Continuing with the example above, the function call delete("AAAA") may be used to delete the key-value pair "AAAA":"ZZZZ."

In some embodiments, information regarding multiple assets or accounts of a user may be recorded on the blockchain system 100. For instance, the user may want to record on the blockchain system 100 information regarding multiple bank accounts. Accordingly, key-value pairs including "AAAA":"ZZZZ," "BBBB":"UUUU," "CCCC":"OOOO," "DDDD":"YYYY," and "EEEE":"XXXX," which, for example, represent account numbers and balances of five different accounts of the user, may be recorded on the blockchain system 100.

In some embodiments, a traversable key-value data storage solution may be utilized to store the key-value pairs on the blockchain system 100. The traversable key-value data storage solution may provide the ability to traverse the key-value pairs stored on the blockchain system 100 so that, e.g., all key-value pairs representing bank accounts of the user can be identified and traversed using a simple function call. Furthermore, in some embodiments, the traversable key-value data storage solution may provide the ability to determine an aggregated value representing a combined total of all bank accounts of that user. Such an aggregated value may be utilized to determine, for example, whether the user has adequate resources to carry out a transaction on the blockchain system 100.

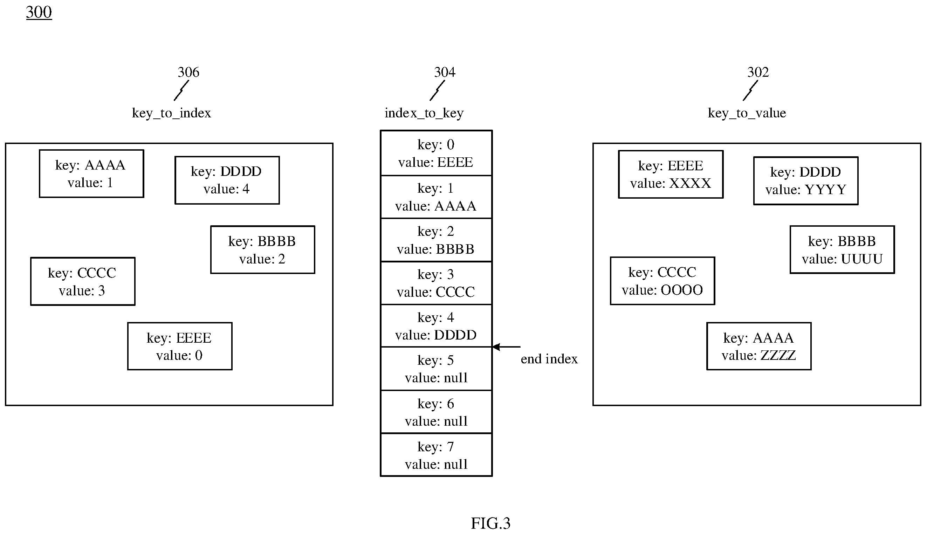

FIG. 3 is a schematic diagram of a traversable key-value data storage solution 300 for a blockchain system, e.g., the blockchain system 100 (FIG. 1), according to an embodiment. Referring to FIG. 3, the traversable key-value data storage solution 300 may include a set of key-value pairs depicted as a key-to-value set 302. The key-to-value set 302 may include user-provided key-value pairs that a user wants to record on the blockchain system 100. Continuing with the example above, the key-to-value set 302 may include key-value pairs {"AAAA":"ZZZZ," "BBBB":"UUUU," "CCCC":"OOOO," "DDDD":"YYYY," "EEEE":"XXXX"}, representing account numbers and balances of five different accounts of the user.

The traversable key-value data storage solution 300 may also include a set of system-generated index-to-key key-value pairs, referred to herein as an index-to-key set 304. For example, the traversable key-value data storage solution 300 may assign indices to the user-provided key-value pairs and instruct the blockchain system 100 to generate the index-to-key set 304 to record the indices along with their corresponding user-provided keys. The index-to-key set 304 may include, e.g., key-value pairs {0:"EEEE," 1:"AAAA," 2:"BBBB," 3:"CCCC," 4:"DDDD"}. In some embodiments, the ordering of the assignment of the indices may not matter. In other words, assigning the index 0 to "EEEE" and assigning the index 1 to "AAAA," and so on, as depicted in FIG. 3, is merely provided as an example and is not meant to be limiting.

In some embodiments, the traversable key-value data storage solution 300 may start the index at a fixed starting index, e.g., 0, and increase the index sequentially for each user-provided key-value pair indexed. In some embodiments, the traversable key-value data storage solution 300 may record an end index, e.g., 4, in the example depicted in FIG. 3, for future references. The traversable key-value data storage solution 300 may utilize the recorded end index value to quickly determine a total number of user-provide keys indexed for a particular user, which in turn can provide the traversable key-value data storage solution 300 the ability to traverse through all user-provided keys for that user, as will be described in more details below. In some embodiments, the traversable key-value data storage solution 300 may record the end index as a key-value pair, e.g., END_INDEX:index.

In some embodiments, the traversable key-value data storage solution 300 may further instruct the blockchain system 100 to generate a set of key-to-index key-value pairs. The set of key-to-index key-value pairs, referred to as the key-to-index set 306 in FIG. 3, may be generated by inverting the key-value pairs in the index-to-key set 304. Continuing with the example above, the traversable key-value data storage solution 300 may instruct the blockchain system 100 to generate key-to-index key-value pairs {"AAAA":1, "BBBB":2, "CCCC":3, "DDDD":4, "EEEE":0}. In this manner, the system-generated key-value pairs in the index-to-key set 304 and the system-generated key-value pairs in the key-to-index set 306 can jointly form a bidirectional mapping between user-provided keys, e.g., "AAAA," "BBBB," "CCCC," "DDDD," and "EEEE," and their assigned indices, e.g., 1, 2, 3, 4, and 0, respectively.

In some embodiments, the traversable key-value data storage solution 300 may store all key-value pairs on one or more nodes, e.g., the nodes 102-110, of the blockchain system 100 (FIG. 1), regardless of whether the key-value pairs are provided by users or generated by the blockchain system 100. For illustrative purposes only, the key-to-value set 302, the index-to-key set 304, and the key-to-index set 306 are depicted separately in Fig. 3.

In some embodiments, the traversable key-value data storage solution 300 may utilize concatenations, e.g., prefixes or suffixes, to uniquely identify the various key-value pairs stored on the blockchain system 100. For example, the traversable key-value data storage solution 300 may instruct the blockchain system 100 to store the user-provided key-value pairs {"AAAA":"ZZZZ," "BBBB":"UUUU," "CCCC":"OOOO," "DDDD":"YYYY," "EEEE":"XXXX"} as, e.g.,
{"USERID_KEY_TO_VALUE_AAAA":"ZZZZ,"
"USERID_KEY_TO_VALUE_BBBB": "UUUU,"
"USERID_KEY_TO_VALUE_CCCC":"OOOO,"
"USERID_KEY_TO_VALUE_DDDD":"YYYY,"
"USERID_KEY_TO_VALUE_EEEE":"XXXX"}.

It is noted that the original user-provided keys are still included in the keys after applying the prefixes. It is also noted that the "USERID" prefix may be a variable that can change based on an identifier associated the user providing the key-value pairs. In this manner, the traversable key-value data storage solution 300 can use the "USERID" prefix to differentiate key-value pairs provided by different users. The "KEY_TO_VALUE" prefix may be a type indicator used to indicate that these key-value pairs comprise records of user-provided key-value pairs, which are different from system-generated key-value pairs.

Similarly, the traversable key-value data storage solution 300 may instruct the blockchain system 100 to store the system-generated key-value pairs {0:"EEEE," 1:"AAAA," 2:"BBBB," 3:"CCCC," 4:"DDDD"} as, e.g.,
{"USERID_INDEX_TO_KEY_0":"EEEE,"
"USERID_INDEX_TO_KEY_1":"AAAA,"
"USERID_INDEX_TO_KEY_2":"BBBB,"
"USERID_INDEX_TO_KEY_3":"CCCC,"
"USERID_INDEX_TO_KEY_4":"DDDD"},
and the system-generated key-value pairs {"AAAA":1, "BBBB":2, "CCCC":3, "DDDD":4, "EEEE":0} as, e.g.,
{"USERID_KEY_TO_INDEX_AAAA":1,
"USERID_KEY_TO_INDEX_BBBB":2,
"USERID_KEY_TO_INDEX_CCCC": 3,
"USERID_KEY_TO_INDEX_DDDD":4,
"USERID_KEY_TO_INDEX_EEEE":0}.

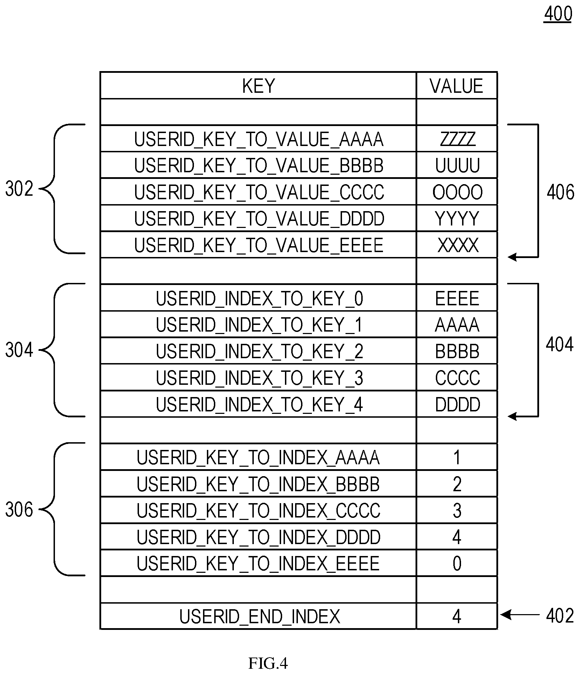

In this manner, the traversable key-value data storage solution 300 may utilize prefixes to uniquely identify the various key-value pairs stored on the blockchain system 100, eliminating the need to require a special data structure for tracking and maintaining the key-to-value set 302, the index-to-key set 304, and the key-to-index set 306. FIG. 4 provides an illustration depicting the various key-value pairs as they are stored on the blockchain system 100. Storing the key-value pairs in this manner allows the traversable key-value data storage solution 300 to support various types of data operations including, e.g., "traverse," "get," "set," and "delete."

In some embodiments, the traversable key-value data storage solution 300 may provide the various data operations in a library deployed on the blockchain system 100, allowing users to utilize the traversable key-value data storage solution 300 through calls to functions provided in the library. In some embodiments, the traversable key-value data storage solution 300 may provide a programming interface to receive function calls from programs executing on the blockchain system 100, including smart contracts and the like.

FIG. 4 illustrates a flow chart of a method 400 for processing a request to traverse key-value pairs, according to an embodiment. The method 400 may be performed on one or more nodes, e.g., the nodes 102-110, of the blockchain system 100 (FIG. 1). In the embodiment, it is assumed that a user wants to traverse through all accounts of USERID (which may identify the user himself, or another user, depending on the specific use case). Accordingly, the user may use a function call in the format of, e.g., traverse(USERID), to call a "traverse" function provided by the traversable key-value data storage solution 300. Upon receiving the call, the traversable key-value data storage solution 300 may proceed to traverse through all accounts of USERID using the method 400.

At step 402, the traversable key-value data storage solution 300 may determine a list of indices assigned to key-value pairs provided by USERID. For example, as illustrated in FIG. 4, the traversable key-value data storage solution 300 may determine that all indices *i* through *j*, where *i* = start index 0 and *j* = end index 4, have been assigned to key-value pairs provided by USERID.

At step 404, the traversable key-value data storage solution 300 may traverse through key-value pairs contained in the index-to-key set 304 to obtain a list of user-provided keys (which are stored as values in the key-value pairs contained in the index-to-key set 304). For example, as illustrated in FIG. 4, the traversable key-value data storage solution 300 may traverse through the key-value pairs contained in the index-to-key set 304 using keys USERID_INDEX_TO_KEY_*i* through USERID_INDEX_TO_KEY_*j*, where *i* = start index 0 and *j* = end index 4, to obtain a list of user-provided keys "EEEE," "AAAA," "BBBB," "CCCC," and "DDDD."

At step 406, the traversable key-value data storage solution 300 may traverse through key-value pairs contained in the key-to-value set 302 based on the list of user-provided keys obtained in step 404. For example, as illustrated in FIG. 4, the traversable key-value data storage solution 300 may traverse through key-value pairs contained in the key-to-value set 302 using keys "USERID KEY TO VALUE " concatenated with "AAAA," "BBBB," "CCCC," "DDDD," and "EEEE." The traversable key-value data storage solution 300 may obtain a list of values "ZZZZ," "UUUU," "OOOO," "YYYY," and "XXXX," respectively, and complete the "traverse" function call.

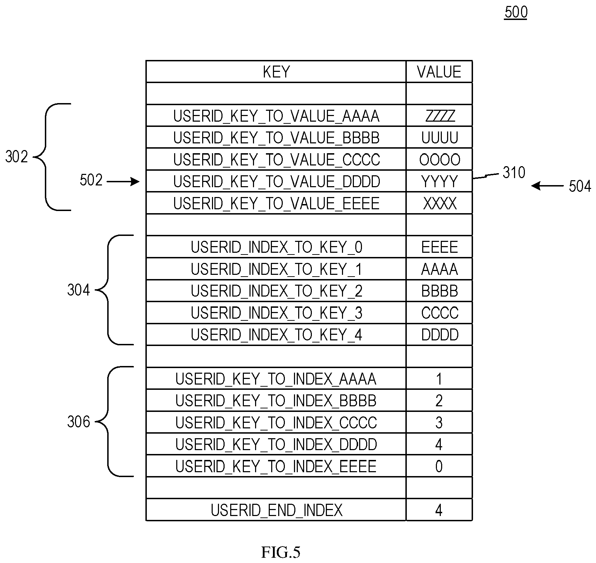

FIG. 5 illustrates a flow chart of a method 500 for processing a request to retrieve key-value pairs, according to an embodiment. The method 500 may be performed on one or more nodes, e.g., the nodes 102-110, of the blockchain system 100 (FIG. 1). In the embodiment, it is assumed that a user wants to verify whether a particular account, e.g., "DDDD," of USERID (which may identify the user himself, or another user, depending on the specific use case) has sufficient balance to facilitate a money transfer. Accordingly, the user may use a function call in the format of, e.g., get(USERID, DDDD), to call a "get" function provided by the traversable key-value data storage solution 300. Upon receiving the call, the traversable key-value data storage solution 300 may proceed to retrieve the requested key-value pair using the method 500.

At step 502, the traversable key-value data storage solution 300 may construct a key to be utilized to retrieve the requested key-value pair based on the prefix rule described above. For example, as illustrated in FIG. 5, the traversable key-value data storage solution 300 may construct the key as "USERID_KEY_TO_VALUE_DDDD." The "USERID" prefix can be utilized to identify the user who provided the requested key-value pair. The "KEY_TO_VALUE" prefix can be utilized to indicate that the key-value pair should be retrieved from the key-to-value set 302. The account number "DDDD" provided in the "get" function call is included as a part of the key to indicate which specific key-value pair in the key-to-value set 302 should be retrieved.

At step 504, the traversable key-value data storage solution 300 may retrieve, from the key-to-value set 302, a key-value pair that has a key matching the constructed key. For example, as illustrated in FIG. 5, the traversable key-value data storage solution 300 may retrieve the key-value pair 310. In some embodiments, the traversable key-value data storage solution 300 may return the key-value pair 310 to complete the "get" function call. Alternatively or additionally, the traversable key-value data storage solution 300 may obtain the value "YYYY" from the key-value pair 310 and return the value to complete the "get" function call.

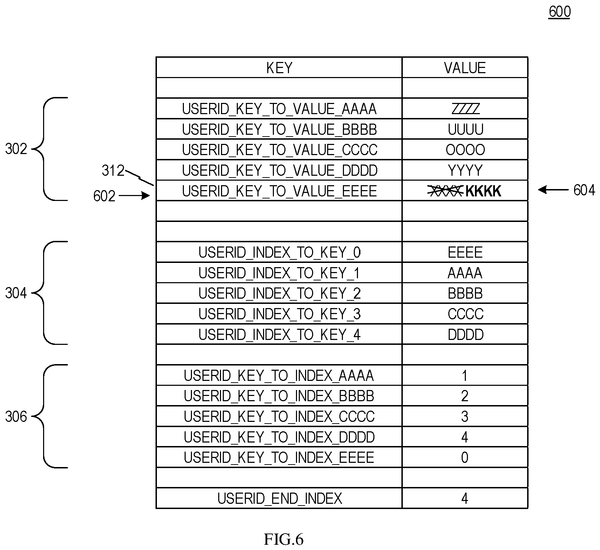

FIG. 6 illustrates a flow chart of a method 600 for processing a request to set the value of an existing key-value pair, according to an embodiment. The method 600 may be performed on one or more nodes, e.g., the nodes 102-110, of the blockchain system 100 (FIG. 1). In the embodiment, it is assumed that a key-value pair 312 is already recorded on the blockchain system 100, and a user wants to update the value recorded in the key-value pair 312 to "KKKK" after carrying out a money transfer transaction. Accordingly, the user may use a function call in the format of, e.g., set(USERID, EEEE, KKKK), to call a "set" function provided by the traversable key-value data storage solution 300. Upon receiving the call, the traversable key-value data storage solution 300 may proceed to set the value for the key-value pair using the method 600.

At step 602, the traversable key-value data storage solution 300 may construct a key, e.g., "USERID KEY TO VALUE EEEE," based on the prefix rule described above and use the key to locate the key-value pair 312.

At step 604, the traversable key-value data storage solution 300 may set the value of the key-value pair 312 according to the new value provided in the "set" function. For example, as illustrated in FIG. 6, the traversable key-value data storage solution 300 sets the value of the key-value pair 312 to "KKKK" as specified in the "set" function call. Upon completion of this operation, the key-value pair 312 will have the value "KKKK" stored for the key "USERID_KEY_TO_VALUE_EEEE," representing the updated balance of the account after carrying out the money transfer transaction.

In some embodiments, the user may also use the "set" function to set a value of a new account on the blockchain system 100. Setting a value of a new account may require the traversable key-value data storage solution 300 to record a new user-provided key-value pair on the blockchain system 100.

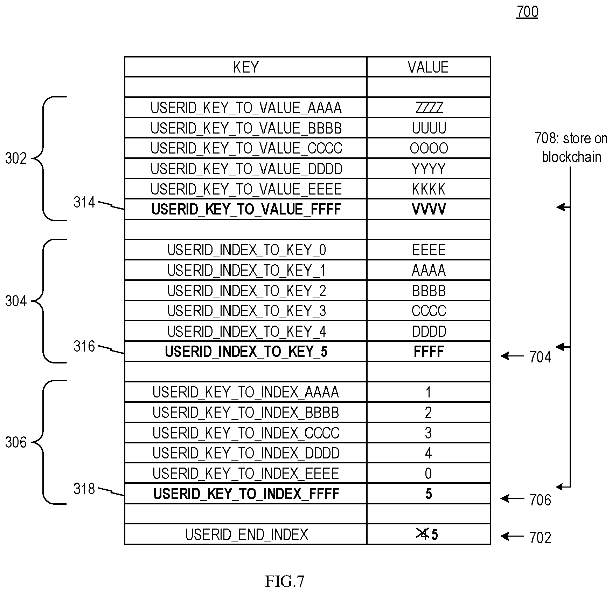

FIG. 7 illustrates a flow chart of a method 700 for processing a request to set a new key-value pair, according to an embodiment. The method 700 may be performed on one or more nodes, e.g., the nodes 102-110, of the blockchain system 100 (FIG. 1). In the embodiment, it is assumed that a user wants to record a key-value pair representing a value of "VVVV" for a new account "FFFF" on the blockchain system 100. Accordingly, the user may use a function call in the format of, e.g., set(USERID, FFFF, VVVV), to call the "set" function provided by the traversable key-value data storage solution 300. Upon receiving the call, the traversable key-value data storage solution 300 may construct a key, e.g., "USERID_KEY_TO_VALUE_FFFF," based on the prefix rule described above and attempt to locate a key-value pair with the key being "USERID KEY TO VALUE FFFF." If the traversable key-value data storage solution 300 locates such a key-value pair, the traversable key-value data storage solution 300 may proceed to set the value for that key-value pair using the method 600. On the other hand, if the traversable key-value data storage solution 300 cannot locate such a key-value pair, meaning that none of the key-value pairs in the key-to-value set 302 has a key that comprises the account number "FFFF," the traversable key-value data storage solution 300 may proceed to record the key-value pair as a new key-value pair 314 on the blockchain system 100 using the method 700.

At step 702, the traversable key-value data storage solution 300 may assign an index to the new key-value pair 314. In some embodiments, the traversable key-value data storage solution 300 may determine the index to be assigned to the new key-value pair 314 based on the end index recorded for the user providing the new key-value pair. For example, as illustrated in FIG. 7, the end index recorded for the user providing the new key-value pair is 4 (recorded in key-value pair USERID_END_INDEX:4), so the traversable key-value data storage solution 300 may sequentially increase the end index by one and assign the increased index, e.g., 5, to the new key-value pair 314.

At step 704, the traversable key-value data storage solution 300 may instruct the blockchain system 100 to generate an index-to-key key-value pair 316. The key of the key-value pair 316 may be set to include the index assigned to the new key-value pair 314 and the value of the key-value pair 316 may be set to include the user-provided key specified in the new key-value pair 314. For example, as illustrated in FIG. 7, the key of the key-value pair 316 may be set to include the index 5 and the value of the key-value pair 316 may be set to include the account number "FFFF." In some embodiments, the traversable key-value data storage solution 300 may instruct the blockchain system 100 to follow the same prefix rules described above when generating the key-value pair 316. In such embodiments, the key of the key-value pair 316 may be set to "USERID_INDEX_TO_KEY_5" and the key-value pair 316 may therefore be provided as "USERID_INDEX_TO_KEY_5":"FFFF."

At step 706, the traversable key-value data storage solution 300 may instruct the blockchain system 100 to generate a key-to-index key-value pair 318. The key of the key-value pair 318 may be set to include the key specified in the new key-value pair 314 and the value of the key-value pair 318 may be set to include the index assigned to the new key-value pair 314. For example, as illustrated in FIG. 7, the key of the key-value pair 318 may be set to include the account number "FFFF" and the value of the key-value pair 318 may be set to include the index 5. In some embodiments, the traversable key-value data storage solution 300 may instruct the blockchain system 100 to follow the same prefix rules described above when generating the key-value pair 318. In such embodiments, the key of the key-value pair 318 may be set to "USERID KEY TO INDEX FFFF" and the key-value pair 318 may therefore be provided as "USERID_KEY_TO_INDEX_FFFF":5.

At step 708, the traversable key-value data storage solution 300 may store the new key-value pair 314, the index-to-key key-value pair 316, and the key-to-index key-value pair 318 on the blockchain system 100 to complete the "set" function call.

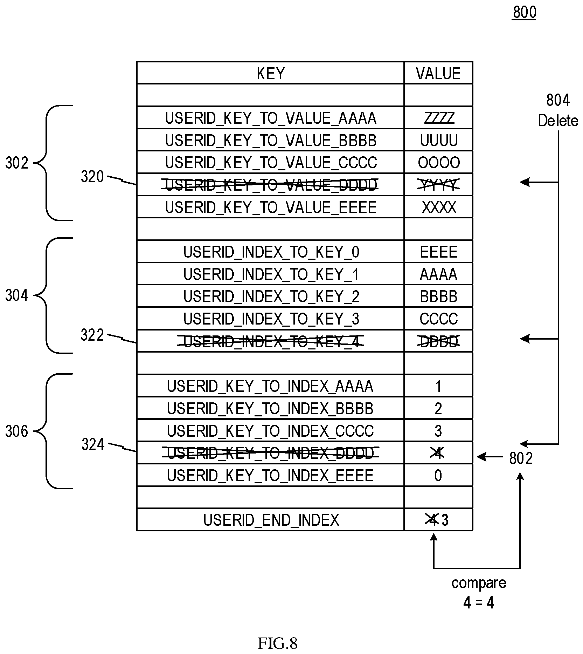

In some embodiments, the traversable key-value data storage solution 300 may provide users abilities to delete key-value pairs stored on the blockchain system 100. FIG. 8 illustrates a flow chart of a method 800 for processing a request to delete a key-value pair, according to an embodiment. The method 800 may be performed on one or more nodes, e.g., the nodes 102-110, of the blockchain system 100 (FIG. 1). In the embodiment, it is assumed that a user wants to delete information regarding account "DDDD." Accordingly, the user may use a function call in the format of, e.g., delete(USERID, DDDD), to call a "delete" function provided by the traversable key-value data storage solution 300. Upon receiving the call, the traversable key-value data storage solution 300 may construct a key, e.g., "USERID_KEY_TO_VALUE DDDD," based on the prefix rule described above and attempt to locate a key-value pair with the key being "USERID_KEY_TO VALUE DDDD." If the traversable key-value data storage solution 300 cannot locate such a key-value pair, the traversable key-value data storage solution 300 may report an error. On the other hand, if the traversable key-value data storage solution 300 locates such a key-value pair, e.g., the key-value pair 320 as depicted in FIG. 8, the traversable key-value data storage solution 300 may proceed to delete the key-value pair 320 using the method 800.

At step 802, the traversable key-value data storage solution 300 may determine whether the index assigned to the key-value pair 320 is at the end of an indexing sequence used to index the key-value pairs in the key-value set 302. In some embodiments, the traversable key-value data storage solution 300 may determine the index assigned to the key-value pair 320 by retrieving the value contained in the key-value pair 324 with the key being "USERID_KEY_TO INDEX DDDD." For example, as illustrated in FIG. 8, the traversable key-value data storage solution 300 may determine that the index assigned to the key-value pair 320 is 4. The traversable key-value data storage solution 300 may also use the index to locate a key-value pair 322. For example, the traversable key-value data storage solution 300 may use "USERID_INDEX_TO_KEY_4" as the key to locate the key-value pair 322.

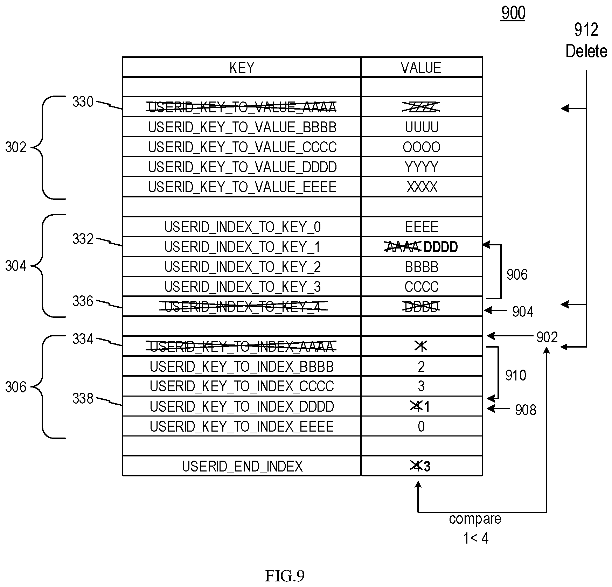

The traversable key-value data storage solution 300 may compare the index assigned to the key-value pair 320 with the end index recorded in USERID_END_INDEX to determine whether the index assigned to the key-value pair 320 is at the end of the indexing sequence. If the traversable key-value data storage solution 300 determines that the index assigned to the key-value pair 320 is at the end of the indexing sequence, the traversable key-value data storage solution 300 may delete the key-value pair 320 and its corresponding system-generated key-value pairs 324 and 322 at step 804 and decrease the recorded end index value for USERID_END_INDEX by one to complete the "delete" function call. On the other hand, if the traversable key-value data storage solution 300 determines that the index assigned to the key-value pair 320 is not at the end of the indexing sequence, the traversable key-value data storage solution 300 may rearrange the indexing sequence to avoid creating a gap in the indexing sequence. The rearrangement of the indexing sequence is illustrated in FIG. 9.

FIG. 9 illustrates a flow chart of a method 900 for processing a request to delete a key-value pair when the key-value pair is not at the end of the indexing sequence, according to an embodiment. The method 900 may be performed on one or more nodes, e.g., the nodes 102-110, of the blockchain system 100 (FIG. 1). In the embodiment, it is assumed that a user wants to delete information regarding account "AAAA." Accordingly, the user may use a function call in the format of, e.g., delete(USERID, AAAA), to call the "delete" function provided by the traversable key-value data storage solution 300. Upon receiving the call, the traversable key-value data storage solution 300 may construct a key, e.g., "USERID_KEY_TO_VALUE_AAAA," based on the prefix rule described above and attempt to locate a key-value pair with the key being "USERID_KEY_TO_VALUE_AAAA." If the traversable key-value data storage solution 300 cannot locate such a key-value pair, the traversable key-value data storage solution 300 may report an error. On the other hand, if the traversable key-value data storage solution 300 locates such a key-value pair, e.g., the key-value pair 330 as depicted in FIG. 9, the traversable key-value data storage solution 300 may proceed to delete the key-value pair 330 using the method 900.

At step 902, the traversable key-value data storage solution 300 may determine whether the index assigned to the key-value pair 330 is at the end of the indexing sequence. In some embodiments, the traversable key-value data storage solution 300 may determine the index assigned to the key-value pair 330 by retrieving the value contained in the key-value pair 334 with the key being "USERID_KEY_TO_INDEX_AAAA." For example, as illustrated in FIG. 9, the traversable key-value data storage solution 300 may determine that the index assigned to the key-value pair 330 is 1. The traversable key-value data storage solution 300 may also use the index to locate a key-value pair 332. For example, the traversable key-value data storage solution 300 may use "USERID_INDEX_TO_KEY_1" as the key to locate the key-value pair 332.

The traversable key-value data storage solution 300 may compare the index assigned to the key-value pair 330 with the end index recorded in USERID_END_INDEX to determine whether the index assigned to the key-value pair 330 is at the end of the indexing sequence. Because the index assigned to the key-value pair 330 is not at the end of the indexing sequence, the traversable key-value data storage solution 300 may need to rearrange the indexing sequence to avoid creating a gap in the indexing sequence.

In some embodiments, the traversable key-value data storage solution 300 may identify a key-value pair 336 as being at the end of the indexing sequence at step 904 and replace the value of the key-value pair 332 with the value contained in the key-value pair 336 at step 906. The key-value pair 336 may also be referred to as a replacement index-to-key key-value pair. In some embodiments, the traversable key-value data storage solution 300 may identify the key-value pair 336 as being at the end of the indexing sequence because the recorded end index is 4, which is included in the key of the key-value pair 336. Because the key-value pair 336 is at the end of the indexing sequence, it can be removed without creating any gaps in the indexing sequence.

In some embodiments, the traversable key-value data storage solution 300 may identify a key-value pair 338 as being affected by this rearrangement at step 908 and set the value of the key-value pair 338 from 4 to 1 (which corresponds to the index assigned to the key-value pair 330) at step 910. The key-value pair 338 may also be referred to as a replacement key-to-index key-value pair. The traversable key-value data storage solution 300 may identify the key-value pair 338 as being affected based on its key "USERID_KEY_TO_INDEX DDDD" including the value "DDDD" contained in the key-value pair 336. The traversable key-value data storage solution 300 may set the value of the key-value pair 338 from 4 to 1 to reflect the fact that "DDDD" has been re-assigned 1 as its new index. The traversable key-value data storage solution 300 may decrease the recorded end index value for USERID_END_INDEX by one and delete the key-value pairs 330, 334, and 336 at step 912 to complete the "delete" function.

It is to be understood that the traversable key-value data storage solution 300 may be implemented using various types of programming languages and that the declarations of the various functions described above are merely provided as examples and are not meant to be limiting. For example, the "traverse," "get,", "set," and "delete" operations described above may be declared differently, e.g., with different function names or different listings of parameters, while still able to perform the same operations described above.

It is also to be understood that the prefix rules described above are merely provided as examples and are not meant to be limiting. Other concatenation techniques, such as appending suffixes and the like, may be utilized as long as the traversable key-value data storage solution 300 can uniquely identify the various key-value pairs stored on the blockchain system 100. In some embodiments, prefix rules (or other concatenation rules) may be provided to support additional indicators. For example, if bank accounts can be associated with both balance values and credit values, then the prefix rules can be defined to support recordation of both values. The balance values may be recorded using prefixes defined as, e.g.,
BALANCE_<USERID>_KEY_TO_VALUE_<ACCOUNT_NUMBER>,
BALANCE_<USERID>_INDEX_TO_KEY_<ACCOUNT_NUMBER>,
BALANCE_<USERID>_KEY_TO_INDEX_<ACCOUNT_NUMBER>, and
BALANCE_<USERID>_END_INDEX,
and the credit values may be recorded using prefixes defined as, e.g.,
CREDIT_<USERID>_KEY_TO_VALUE_<ACCOUNT_NUMBER>,
CREDIT_<USERID>_INDEX_TO_KEY_<ACCOUNT_NUMBER>,
CREDIT_<USERID>_KEY_TO_INDEX_<ACCOUNT_NUMBER>, and
CREDIT_<USERID>_END INDEX.

In this manner, if users want to operate on balance values, the users may indicate, e.g., using function parameters, that the "BALANCE" prefix should be used when performing the operations described above. On the other hand, if the users want to operate on credit values, the users may indicate that the "CREDIT" prefix should be used when performing the operations described above. It is contemplated that such prefix rules (or other concatenation rules) may be further expanded as needed.

Furthermore, it is to be understood that the traversable key-value data storage solution 300 described above may be implemented in storage systems that are not a part of a blockchain system. It is contemplated that the traversable key-value data storage solution 300 may be implemented in any storage systems capable of supporting key-value pair data storage.

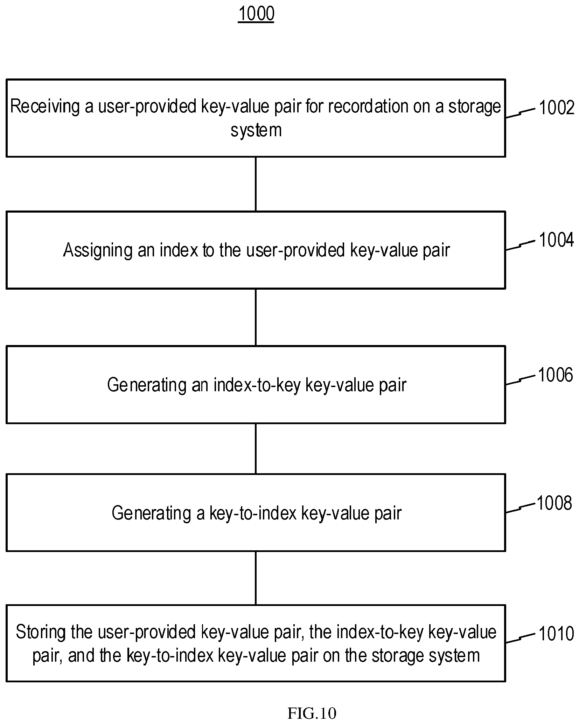

FIG. 10 illustrates a flow chart of a method 1000 for providing traversable key-value data storage according to an embodiment. The method 1000 may be performed by one or more nodes, e.g., the nodes 102-110, of the blockchain system 100 (FIG. 1).

At step 1002, a node, e.g., the node 102, may receive a user-provided key-value pair for recordation on a storage system, e.g., the blockchain system 100. The user-provided key-value pair may include a user-provided key and a user-provided value. At step 1004, the node 102 may assigning an index to the user-provided key-value pair. In some embodiments, the node 102 may determine the index to be assigned to the user-provided key-value pair based on an end index recorded for the user.

At step 1006, the node 102 may generate an index-to-key key-value pair. The key of the index-to-key key-value pair may be set to include the index assigned to the user-provided key-value pair. The value of the index-to-key key-value pair may be set to include the user-provided key specified in the user-provided key-value pair. At step 1008, the node 102 may generate a key-to-index key-value pair. The key of the key-to-index key-value pair may be set to include the user-provided key specified in the user-provided key-value pair. The value of the key-to-index key-value pair may be set to include the index assigned to the user-provided key-value pair. At step 1010, the node 102 may store the user-provided key-value pair, the index-to-key key-value pair, and the key-to-index key-value pair on the storage system, e.g., the blockchain system 100.

In some embodiments, the node 102 may provide a programming interface to receive data requests, e.g., from smart contracts executing on the blockchain system 100. In some embodiments, the data requests may be in the form of function calls.

In some embodiments, the data requests may include a request to traverse key-value pairs. The node 102 may utilize the method 400 (FIG. 4) to process the traverse request. In some embodiments, the data requests may include a request to retrieve a key-value pair. The node 102 may utilize the method 500 (FIG. 5) to process the retrieve request. In some embodiments, the data requests may include a request to record a key-value pair. If the key-value pair exists on the storage system, the node 102 may utilize the method 600 (FIG. 6) to process the request and set the value of the existing key-value pair. If the key-value pair does not exist on the storage system, the node 102 may utilize the method 700 (FIG. 7) to process the request and record a new key-value pair on the storage system. In some embodiments, the data requests may include a request to delete a key-value pair. If the key-value pair is indexed at the end of an indexing sequence, the node 102 may utilize the method 800 (FIG. 8) to process the request and delete the key-value pair. If the key-value pair is not indexed at the end of an indexing sequence, the node 102 may utilize the method 900 (FIG. 9) to process the request and delete the key-value pair.

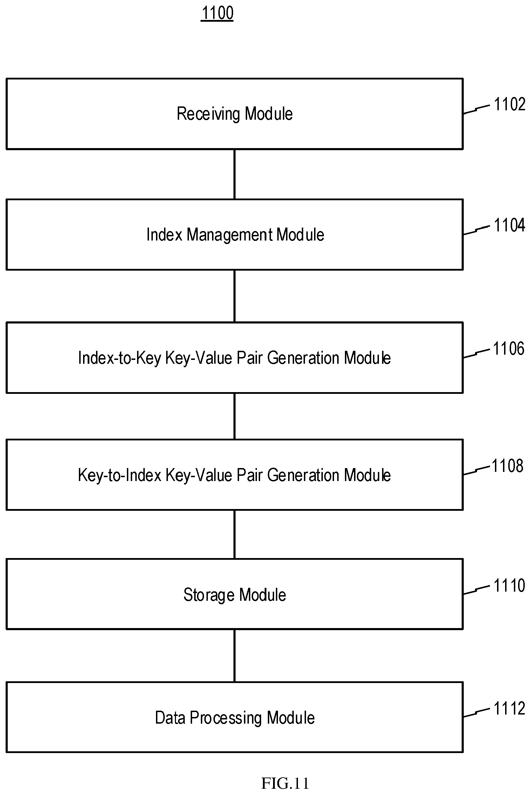

FIG. 11 is a block diagram of an apparatus 1100 for providing traversable key-value data storage according to an embodiment. For example, the apparatus 1100 may be an implementation of a software process, and may correspond to the method 1000 (FIG. 10). Referring to FIG. 11, the apparatus 1100 may include a receiving module 1102, an index management module 1104, an index-to-key key-value pair generation module 1106, a key-to-index key-value pair generation module 1108, a storage module 1110, and a data processing module 1112.

The receiving module 1102 may receive a user-provided key-value pair for recordation on a storage system, e.g., the blockchain system 100 (FIG. 1). The index management module 1104 may assign an index to the user-provided key-value pair.

The index-to-key key-value pair generation module 1106 may generate an index-to-key key-value pair for the user-provided key-value pair. The key of the index-to-key key-value pair may be set to include the index assigned to the user-provided key-value pair. The value of the index-to-key key-value pair may be set to include the user-provided key specified in the user-provided key-value pair. The key-to-index key-value pair generation module 1108 may generate a key-to-index key-value pair for the user-provided key-value pair. The key of the key-to-index key-value pair may be set to include the user-provided key specified in the user-provided key-value pair. The value of the key-to-index key-value pair may be set to include the index assigned to the user-provided key-value pair. The storage module 1110 may store the user-provided key-value pair, the index-to-key key-value pair, and the key-to-index key-value pair on the storage system, e.g., the blockchain system 100.

The data processing module 1112 may provide a programming interface to receive data requests, e.g., from smart contracts executing on the blockchain system 100. In some embodiments, the data requests may be in the form of function calls. In some embodiments, the data requests may include a request to traverse key-value pairs. The data processing module 1112 may utilize the method 400 (FIG. 4) to process the traverse request. In some embodiments, the data requests may include a request to retrieve a key-value pair. The data processing module 1112 may utilize the method 500 (FIG. 5) to process the retrieve request. In some embodiments, the data requests may include a request to record a key-value pair. If the key-value pair exists on the storage system, the data processing module 1112 may utilize the method 600 (FIG. 6) to process the request and set the value of the existing key-value pair. If the key-value pair does not exist on the storage system, the data processing module 1112 may utilize the method 700 (FIG. 7) to process the request and record a new key-value pair on the storage system. In some embodiments, the data requests may include a request to delete a key-value pair. If the key-value pair is indexed at the end of an indexing sequence, the data processing module 1112 may utilize the method 800 (FIG. 8) to process the request and delete the key-value pair. If the key-value pair is not indexed at the end of an indexing sequence, the data processing module 1112 may utilize the method 900 (FIG. 9) to process the request and delete the key-value pair.

Each of the above described modules may be implemented as software, or hardware, or a combination of software and hardware. For example, each of the above described modules may be implemented using a processor executing instructions stored in a memory. Also, for example, each the above described modules may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the described methods. Further for example, each of the above described modules may be implemented by using a computer chip or an entity, or implemented by using a product having a certain function. In one embodiment, the apparatus 1100 may be a computer, and the computer may be a personal computer, a laptop computer, a cellular phone, a camera phone, a smartphone, a personal digital assistant, a media player, a navigation device, an email receiving and sending device, a game console, a tablet computer, a wearable device, or any combination of these devices.

For an implementation process of functions and roles of each module in the apparatus 1100, references can be made to corresponding steps in the above-described methods. Details are omitted here for simplicity.

In some embodiments, a computer program product may include a non-transitory computer-readable storage medium having computer-readable program instructions thereon for causing a processor to carry out the above-described methods.

The computer-readable storage medium may be a tangible device that can store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

The computer-readable program instructions for carrying out the above-described methods may be assembler instructions, instruction-set-architecture (ISA) instructions, machine instructions, machine dependent instructions, microcode, firmware instructions, state-setting data, or source code or object code written in any combination of one or more programming languages, including an object oriented programming language, and conventional procedural programming languages. The computer-readable program instructions may execute entirely on a computing device as a stand-alone software package, or partly on a first computing device and partly on a second computing device remote from the first computing device. In the latter scenario, the second, remote computing device may be connected to the first computing device through any type of network, including a local area network (LAN) or a wide area network (WAN).

The computer-readable program instructions may be provided to a processor of a general-purpose or special-purpose computer, or other programmable data processing apparatus to produce a machine, such that the instructions, which execute via the processor of the computer or other programmable data processing apparatus, create means for implementing the above-described methods.

The flow charts and diagrams in the figures illustrate the architecture, functionality, and operation of possible implementations of devices, methods, and computer program products according to various embodiments of the specification. In this regard, a block in the flow charts or diagrams may represent a software program, segment, or portion of code, which comprises one or more executable instructions for implementing specific functions. It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the diagrams and/or flow charts, and combinations of blocks in the diagrams and flow charts, may be implemented by special purpose hardware-based systems that perform the specified functions or acts, or combinations of special purpose hardware and computer instructions.

It is appreciated that certain features of the specification, which are, for clarity, described in the context of separate embodiments, may also be provided in combination in a single embodiment. Conversely, various features of the specification, which are, for brevity, described in the context of a single embodiment, may also be provided separately or in any suitable subcombination or as suitable in any other described embodiment of the specification. Certain features described in the context of various embodiments are not essential features of those embodiments, unless noted as such.

Although the specification has been described in conjunction with specific embodiments, many alternatives, modifications and variations will be apparent to those skilled in the art. Accordingly, the following claims embrace all such alternatives, modifications and variations that fall within the terms of the claims.

## Claims

1. A method (1000) performed by a node of a blockchain system for providing a traversable key-value data storage solution to store key-value pairs on the blockchain system, the method comprising:
receiving (1002) a first user-provided key-value pair for recordation on the blockchain system, the first user-provided key-value pair comprising a first user-provided key and a first user-provided value, wherein the first user-provided key represents an account number of a first account of a user and the first user-provided value represents a balance of the first account of the user;
generating a first key-value pair of a key-to-value set, the first key-value pair generated to record the received first user-provided key-value pair, wherein the first key-value pair has a key comprising the first user-provided key and a value comprising the first user-provided value, wherein the key-to-value set is a set of key-value pairs that store a plurality of user-provided key-value pairs associated with a respective plurality of accounts of the user;
assigning (1004) a first index to the first user-provided key-value pair;
generating (1006) a first index-to-key key-value pair of an index-to-key set, the first index-to-key key-value pair having a key comprising the first index and a value comprising the first user-provided key, wherein the index-to-key set is a set of key-value pairs that record indices assigned to the plurality of user-provided key-value pairs along with the user-provided keys of the plurality of user-provided key-value pairs;
generating (1008) a first key-to-index key-value pair of a key-to-index set, the first key-to-index key-value pair having a key comprising the first user-provided key and a value comprising the first index, wherein the key-to-index set is a set of key-value pairs that record the user-provided keys of the plurality of user-provided key-value pairs along with the indices assigned to the plurality of user-provided key-value pairs, wherein the index-to-key set and the key-to-index set jointly form a bidirectional mapping between the user-provided keys and their assigned indices;
wherein the key contained in the first key-value pair, the key contained in the first index-to-key key-value pair and the key contained in the first key-to-index key-value pair are generated using concatenations according to a prefix rule to uniquely identify the key-value pairs stored on the blockchain system, wherein the prefix rule includes specification of a user identifier and a type indicator as prefixes in each of the key contained in the first key-value pair, the key contained in the first index-to-key key-value pair and the key contained in the first key-to-index key-value pair, wherein the user identifier enables to differentiate key-value pairs provided by different users and the type indicator indicates whether the key-value pair associated with the key belongs to the key-to-value set, the index-to-key set or the key-to-index set,
wherein the key contained in the first key-value pair includes a first user identifier and a first type indicator, wherein the first user identifier is associated with the user and the first type indicator indicates that the first key-value pair belongs to the key-to-value set,
wherein the key contained in the first index-to-key key-value pair includes the first user identifier and a second type indicator, wherein the second type indicator indicates that the first index-to-key key-value pair is a system generated key-value pair and belongs to the index-to-key set; and
wherein the key contained in the first key-to-index key-value pair includes the first user identifier and a third type indicator, wherein the third type indicator indicates that the first key-to-index key-value pair is a system generated key-value pair and belongs to the key-to-index set, the method further comprising:
storing (1010) the first key-value pair, the first index-to-key key-value pair, and the first key-to-index key-value pair in the key-to-value set, the index-to-key set and the key-to-index set on the blockchain system, respectively;
wherein the indices assigned to the plurality of user-provided key-value pairs in the index-to-key set are numbered sequentially and the blockchain system further stores a key-value pair recording an end index for the user, the value of which stores the end of an indexing sequence comprising the indices and enables to quickly determine a total number of the user-provided keys indexed for the user.

2. The method of claim 1, further comprising:
providing the traversable key-value data storage solution as a library deployed on the blockchain system; and
providing a programming interface to receive a data request from a smart contract executing on the blockchain system.

3. The method of claim 1, wherein the key of the key-value pair recording the end index comprises the first user identifier as prefix.

4. The method of any preceding claim, further comprising:
receiving a request to traverse through the plurality of user-provided key-value pairs stored in the key-to-value set on the blockchain system for the user;
determining a list of the indices assigned to the plurality of user-provided key-value pairs, comprising utilizing the end index for the user stored in the key-value pair recording the end index for the user to determine a total number of user-provided keys indexed for the user;
traversing through the key-value pairs contained in the index-to-key set based on the list of indices to obtain a list of user-provided keys; and
traversing through the key-value pairs contained in the key-to-value set based on the obtained list of user-provided keys.

5. The method of any preceding claim, the method further comprising:
receiving a request to record a second user-provided key-value pair for the user for recordation on the blockchain system, the second user-provided key-value pair comprising a second user-provided key and a second user-provided value;
determining whether any user-provided key-value pair stored on the blockchain system comprises a user-provided key matching the second user-provided key; and
in response to a determination that a particular key-value pair stored on the blockchain system comprises a user-provided key matching the second user-provided key, setting the second user-provided value as the value for the particular key-value pair.

6. The method of claim 5, further comprising:
in response to a determination that no user-provided key-value pair stored on the blockchain system comprises a user-provided key matching the second user-provided key, processing the second user-provided key-value pair for recordation on the blockchain system.

7. The method of claim 6, wherein the processing the second user-provided key-value pair for recordation on the storage system further comprises:
generating a second key-value pair of the key-to-value set to record the received second user-provided key-value pair, wherein the second key-value pair has a key comprising the second user-provided key and a value comprising the second user-provided value;
assigning a second index to the second user-provided key-value pair;
generating a second index-to-key key-value pair of the index-to-key set, the second index-to-key key-value pair having a key comprising the second index and a value comprising the second user-provided key;
generating a second key-to-index key-value pair of the key-to-index set, the second key-to-index key-value pair having a key comprising the second user-provided key and a value comprising the second index; and
storing the second new key-value pair, the second index-to-key key-value pair, and the second key-to-index key-value pair in the key-to-value set, the index-to-key set and the key-to-index set on the blockchain system, respectively.

8. The method of claim 7, wherein the assigning a second index to the second user-provided key-value pair comprises:
determining the index to be assigned to the second key-value pair based on the end index recorded in the key-value pair recording the end index for the user,
sequentially increasing the end index by one, and
assigning the increased index to the second user-provided key-value pair.

9. The method of any of the preceding claims, further comprising:
receiving a request to delete the first user-provided key-value pair;
determining whether the first index assigned to the first user-provided key-value pair is at an end of the indexing sequence using the end index stored in the key-value pair recording the end index for the user; and
in response to a determination that the first index is at the end of the indexing sequence, deleting the first key-value pair, the first index-to-key key-value pair, and the first key-to-index key-value pair from the blockchain system.

10. The method of claim 9, further comprising:
in response to a determination that the first index is not at the end of the indexing sequence, rearranging the indexing sequence,
wherein the rearranging the indexing sequence further comprises:
identifying a replacement index-to-key key-value pair, the replacement index-to-key key-value pair having been indexed at the end of the indexing sequence;
replacing the value of the first index-to-key key-value pair with a value contained in the replacement index-to-key key-value pair;
identifying a replacement key-to-index key-value pair, the replacement key-to-index key-value pair having a key comprising the value contained in the replacement index-to-key key-value pair;
setting the first index as the value of the replacement key-to-index key-value pair; and
deleting the first key-value pair, the replacement index-to-key key-value pair, and the first key-to-index key-value pair from the blockchain system.

11. The method of claim 2, wherein the data request comprises at least one of: a request to record a user-provided key-value pair, a request to retrieve a user-provided key-value pair, a request to delete a user-provided key-value pair, or a request to traverse through key-value pairs stored on the blockchain system recording user-provided key-values pairs.

12. A node (102 - 110) of a blockchain system (100) configured to perform the method of any of claims 1 to 11.

13. A non-transitory computer-readable medium (206) having stored therein instructions that, when executed by a processor (204) of a device (102 - 110, 200), cause the device (102 - 110, 200) to perform the method of any of claims 1 to 11.

## Patentansprüche

1. Verfahren (1000), das von einem Knoten eines Blockchain-Systems durchgeführt wird, um eine durchquerbare Schlüssel-Wert-Datenspeicherlösung bereitzustellen, um Schlüssel-Wert-Paare auf dem Blockchain-System zu speichern, wobei das Verfahren Folgendes umfasst:
Empfangen (1002) eines ersten benutzergelieferten Schlüssel-Wert-Paares zur Aufzeichnung im Blockchain-System, wobei das erste benutzergelieferte Schlüssel-Wert-Paar einen ersten benutzergelieferten Schlüssel und einen ersten benutzergelieferten Wert umfasst,
wobei der erste benutzergelieferte Schlüssel eine Kontonummer eines ersten Kontos eines Benutzers repräsentiert und der erste benutzergelieferte Wert einen Saldo des ersten Kontos des Benutzers repräsentiert;
Erzeugen eines ersten Schlüssel-Wert-Paares eines Schlüssel-zu-Wert-Satzes, wobei das erste Schlüssel-Wert-Paar erzeugt wird, um das empfangene erste benutzergelieferte Schlüssel-Wert-Paar aufzuzeichnen,
wobei das erste Schlüssel-Wert-Paar einen Schlüssel hat, der den ersten benutzergelieferten Schlüssel umfasst, und einen Wert, der den ersten benutzergelieferten Wert umfasst,
wobei der Schlüssel-zu-Wert-Satz ein Satz von Schlüssel-Wert-Paaren ist, der eine Vielzahl von benutzergelieferten Schlüssel-Wert-Paaren speichert, die mit einer entsprechenden Vielzahl von Konten des Benutzers verbunden sind;
Zuordnen (1004) eines ersten Indexes zu dem ersten benutzergelieferten Schlüssel-Wert-Paar;
Erzeugen (1006) eines ersten Index-zu-Schlüssel-Schlüssel-Wert-Paares eines Index-zu-Schlüssel-Satzes, wobei das erste Index-zu-Schlüssel-Schlüssel-Wert-Paar einen Schlüssel aufweist, der den ersten Index umfasst, und einen Wert, der den ersten benutzergelieferten Schlüssel umfasst,
wobei der Index-zu-Schlüssel-Satz ein Satz von Schlüssel-Wert-Paaren ist, der Indizes aufzeichnet, die der Vielzahl von benutzergelieferten Schlüssel-Wert-Paaren zusammen mit den benutzergelieferten Schlüsseln der Vielzahl von benutzergelieferten Schlüssel-Wert-Paaren zugeordnet sind;
Erzeugen (1008) eines ersten Schlüssel-zu-Index-Schlüssel-Wert-Paares eines Schlüssel-zu-Index-Satzes, wobei das erste Schlüssel-zu-Index-Schlüssel-Wert-Paar einen Schlüssel hat, der den ersten benutzergelieferten Schlüssel umfasst, und einen Wert, der den ersten Index umfasst,
wobei der Schlüssel-zu-Index-Satz ein Satz von Schlüssel-Wert-Paaren ist, der die benutzergelieferten Schlüssel der Vielzahl von benutzergelieferten Schlüssel-Wert-Paaren zusammen mit den Indizes aufzeichnet, die der Vielzahl von benutzergelieferten Schlüssel-Wert-Paaren zugewiesen sind,
wobei der Index-zu-Schlüssel-Satz und der Schlüssel-zu-Index-Satz gemeinsam eine bidirektionale Abbildung zwischen den benutzergelieferten Schlüsseln und ihren zugewiesenen Indizes bilden;
wobei der in dem ersten Schlüssel-Wert-Paar enthaltene Schlüssel, der in dem ersten Index-zu-Schlüssel-Schlüssel-Wert-Paar enthaltene Schlüssel und der in dem ersten Schlüssel-zu-Index-Schlüssel-Wert-Paar enthaltene Schlüssel unter Verwendung von Verkettungen gemäß einer Präfix-Regel erzeugt werden, um die in dem Blockchain-System gespeicherten Schlüssel-Wert-Paare eindeutig zu identifizieren,
wobei die Präfix-Regel die Spezifikation eines Benutzeridentifikators und eines Typenindikators als Präfixe in jedem des im ersten Schlüssel-Wert-Paar enthaltenen Schlüssels, des im ersten Index-zu-Schlüssel-Schlüssel-Wert-Paar enthaltenen Schlüssels und des im ersten Schlüssel-zu-Index-Schlüssel-Wert-Paar enthaltenen Schlüssels umfasst,
wobei der Benutzeridentifikator es ermöglicht, von verschiedenen Benutzern bereitgestellte Schlüssel-Wert-Paare zu unterscheiden, und der Typenindikator anzeigt, ob das dem Schlüssel zugeordnete Schlüssel-Wert-Paar zu dem Schlüssel-zu-Wert-Satz, dem Index-zu-Schlüssel-Satz oder dem Schlüssel-zu-Index-Satz gehört,
wobei der im ersten Schlüssel-Wert-Paar enthaltene Schlüssel einen ersten Benutzeridentifikator und einen ersten Typenindikator enthält,
wobei der erste Benutzeridentifikator dem Benutzer zugeordnet ist und der erste Typenindikator anzeigt, dass das erste Schlüssel-Wert-Paar zu dem Schlüssel-zu-Wert-Satz gehört,
wobei der im ersten Index-zu-Schlüssel-Schlüssel-Wert-Paar enthaltene Schlüssel den ersten Benutzeridentifikator und einen zweiten Typenindikator enthält,
wobei der zweite Typenindikator anzeigt, dass das erste Index-zu-Schlüssel-Schlüssel-Wert-Paar ein systemgeneriertes Schlüssel-Wert-Paar ist und zu dem Index-zu-Schlüssel-Satz gehört; und
wobei der im ersten Schlüssel-zu-Index-Schlüssel-Wert-Paar enthaltene Schlüssel den ersten Benutzeridentifikator und einen dritten Typenindikator enthält,
wobei der dritte Typenindikator anzeigt, dass das erste Schlüssel-zu-Index-Schlüssel-Wert-Paar ein systemgeneriertes Schlüssel-Wert-Paar ist und zu dem Schlüssel-zu-Index-Satz gehört, wobei das Verfahren ferner Folgendes umfasst:
Speichern (1010) des ersten Schlüssel-Wert-Paares, des ersten Index-zu-Schlüssel-Schlüssel-Wert-Paares und des ersten Schlüssel-zu-Index-Schlüssel-Wert-Paares in dem Schlüssel-zu-Wert-Satz, dem Index-zu-Schlüssel-Satz bzw. dem Schlüssel-zu-Index-Satz auf dem Blockchain-System;
wobei die Indizes, die der Vielzahl der benutzergelieferten Schlüssel-Wert-Paare in dem Index-zu-Schlüssel-Satz zugewiesen sind, fortlaufend nummeriert sind, und das Blockchain-System ferner ein Schlüssel-Wert-Paar speichert, das einen Endindex für den Benutzer aufzeichnet, dessen Wert das Ende einer Indizierungssequenz speichert, die die Indizes umfasst, und es ermöglicht, schnell eine Gesamtzahl der benutzergelieferten Schlüssel zu bestimmen, die für den Benutzer indiziert sind.

2. Verfahren nach Anspruch 1, das ferner Folgendes umfasst:
Bereitstellen der durchquerbaren Schlüssel-Wert-Daten-Speicherlösung als Bibliothek, die auf dem Blockchain-System eingesetzt wird; und
Bereitstellen einer Programmierschnittstelle zum Empfangen einer Datenanforderung von einem auf dem Blockchain-System ausgeführten intelligenten Vertrag.

3. Verfahren nach Anspruch 1, wobei der Schlüssel des Schlüssel-Wert-Paares, das den Endindex aufzeichnet, den ersten Benutzeridentifikator als Präfix enthält.

4. Verfahren nach einem beliebigen vorhergehenden Anspruch, das ferner Folgendes umfasst:
Empfangen einer Anforderung zum Durchqueren der mehreren benutzergelieferten Schlüssel-Wert-Paare, die in dem Schlüssel-zu-Wert-Satz auf dem Blockchain-System für den Benutzer gespeichert sind;
Bestimmen einer Liste der Indizes, die der Vielzahl der benutzergelieferten Schlüssel-Wert-Paare zugeordnet sind, umfassend das Verwenden des Endindexes für den Benutzer, der in dem Schlüssel-Wert-Paar gespeichert ist, das den Endindex für den Benutzer aufzeichnet, um eine Gesamtzahl der benutzergelieferten Schlüssel zu bestimmen, die für den Benutzer indiziert sind;
Durchqueren der Schlüssel-Wert-Paare, die in dem Index-zu-Schlüssel-Satz enthalten sind, basierend auf der Liste der Indizes, um eine Liste der benutzergelieferten Schlüssel zu erhalten; und
Durchqueren der Schlüssel-Wert-Paare, die in dem Schlüssel-zu-Wert-Satz enthalten sind, auf der Grundlage der erhaltenen Liste der benutzergelieferten Schlüssel.

5. Verfahren nach einem der vorhergehenden Ansprüche, wobei das Verfahren ferner Folgendes umfasst:
Empfangen einer Anforderung, ein zweites benutzergeliefertes Schlüssel-Wert-Paar für den Benutzer zur Aufzeichnung im Blockchain-System aufzuzeichnen, wobei das zweite benutzergelieferte Schlüssel-Wert-Paar einen zweiten benutzergelieferten Schlüssel und einen zweiten benutzergelieferten Wert umfasst;
Bestimmen, ob irgendein benutzergeliefertes Schlüssel-Wert-Paar, das auf dem Blockchain-System gespeichert ist, einen benutzergelieferten Schlüssel umfasst, der mit dem zweiten benutzergelieferten Schlüssel übereinstimmt; und
als Reaktion auf eine Feststellung, dass ein bestimmtes Schlüssel-Wert-Paar, das auf dem Blockchain-System gespeichert ist, einen benutzergelieferten Schlüssel umfasst, der mit dem zweiten benutzergelieferten Schlüssel übereinstimmt, Festlegen des zweiten benutzergelieferten Wertes als Wert für das bestimmte Schlüssel-Wert-Paar.

6. Verfahren nach Anspruch 5, das ferner Folgendes umfasst:
als Reaktion auf eine Feststellung, dass kein benutzergeliefertes Schlüssel-Wert-Paar, das auf dem Blockchain-System gespeichert ist, einen benutzergelieferten Schlüssel umfasst, der mit dem zweiten benutzergelieferten Schlüssel übereinstimmt, Verarbeiten des zweiten benutzergelieferten Schlüssel-Wert-Paares zur Aufzeichnung auf dem Blockchain-System.

7. Verfahren nach Anspruch 6, wobei das Verarbeiten des zweiten benutzergelieferten Schlüssel-Wert-Paares zur Aufzeichnung auf dem Speichersystem ferner Folgendes umfasst:
Erzeugen eines zweiten Schlüssel-Wert-Paares des Schlüssel-zu-Wert-Satzes, um das empfangene zweite benutzergelieferte Schlüssel-Wert-Paar aufzuzeichnen,
wobei das zweite Schlüssel-Wert-Paar einen Schlüssel hat, der den zweiten benutzergelieferten Schlüssel umfasst, und einen Wert, der den zweiten benutzergelieferten Wert umfasst;
Zuweisen eines zweiten Indexes zu dem zweiten benutzergelieferten Schlüssel-Wert-Paar;
Erzeugen eines zweiten Index-zu-Schlüssel-Schlüssel-Wert-Paares des Index-zu-Schlüssel-Satzes, wobei das zweite Index-zu-Schlüssel-Schlüssel-Wert-Paar einen Schlüssel hat, der den zweiten Index umfasst, und einen Wert, der den zweiten benutzergelieferten Schlüssel umfasst;
Erzeugen eines zweiten Schlüssel-zu-Index-Schlüssel-Wert-Paares des Schlüssel-zu-Index-Satzes, wobei das zweite Schlüssel-zu-Index-Schlüssel-Wert-Paar einen Schlüssel mit dem zweiten benutzergelieferten Schlüssel und einen Wert mit dem zweiten Index aufweist; und
Speichern des zweiten neuen Schlüssel-Wert-Paares, des zweiten Index-zu-Schlüssel-Schlüssel-Wert-Paares und des zweiten Schlüssel-zu-Index-Schlüssel-Wert-Paares in dem Schlüssel-zu-Wert-Satz, dem Index-zu-Schlüssel-Satz bzw. dem Schlüssel-zu-Index-Satz auf dem Blockchain-System.

8. Verfahren nach Anspruch 7, wobei das Zuweisen eines zweiten Index zu dem zweiten benutzergelieferten Schlüssel-Wert-Paar Folgendes umfasst:
Bestimmen des dem zweiten Schlüssel-Wert-Paar zuzuordnenden Indexes auf der Grundlage des Endindexes, der in dem Schlüssel-Wert-Paar aufgezeichnet ist, das den Endindex für den Benutzer aufzeichnet,
sequentielles Erhöhen des Endindexes um eins, und
Zuweisen des erhöhten Indexes zu dem zweiten benutzergelieferten Schlüssel-Wert-Paar.

9. Verfahren nach einem beliebigen der vorhergehenden Ansprüche, das ferner Folgendes umfasst:
Empfangen einer Anfrage zum Löschen des ersten benutzergelieferten Schlüssel-Wert-Paares;
Bestimmen, ob der erste Index, der dem ersten benutzergelieferten Schlüssel-Wert-Paar zugewiesen ist, an einem Ende der Indizierungssequenz liegt, unter Verwendung des Endindex, der in dem Schlüssel-Wert-Paar gespeichert ist, das den Endindex für den Benutzer aufzeichnet; und
als Reaktion auf die Feststellung, dass sich der erste Index am Ende der Indizierungssequenz befindet, Löschen des ersten Schlüssel-Wert-Paares, des ersten Index-zu-Schlüssel-Schlüssel-Wert-Paares und des ersten Schlüssel-zu-Index-Schlüssel-Wert-Paares aus dem Blockchain-System.

10. Verfahren nach Anspruch 9, das ferner Folgendes umfasst:
als Reaktion auf die Feststellung, dass der erste Index nicht am Ende der Indizierungssequenz liegt, Umordnen der Indizierungssequenz,
wobei das Umordnen der Indizierungssequenz ferner Folgendes umfasst:
Identifizieren eines Ersatz-Index-zu-Schlüssel-Schlüssel-Wert-Paares, wobei das Ersatz-Index-zu-Schlüssel-Schlüssel-Wert-Paar am Ende der Indizierungssequenz indiziert wurde;
Ersetzen des Wertes des ersten Index-zu-Schlüssel-Schlüssel-Wert-Paares durch einen Wert, der in dem Ersatz-Index-zu-Schlüssel-Schlüssel-Wert-Paar enthalten ist;
Identifizieren eines Ersatz-Schlüssel-zu-Index-Schlüssel-Wert-Paares, wobei das Ersatz-Schlüssel-zu-Index-Schlüssel-Wert-Paar einen Schlüssel hat, der den im Ersatz-Index-zu-Schlüssel-Schlüssel-Wert-Paar enthaltenen Wert umfasst;
Festlegen des ersten Index als Wert des Ersatz-Index-zu-Schlüssel-Schlüssel-Wert-Paares; und
Löschen des ersten Schlüssel-Wert-Paares, des Ersatz-Index-zu-Schlüssel-Schlüssel-Wert-Paares und des ersten Schlüssel-zu-Index-Schlüssel-Wert-Paares aus dem Blockchain-System.

11. Verfahren nach Anspruch 2, wobei die Datenanforderung mindestens eines der folgenden Elemente umfasst:
eine Anfrage zur Aufzeichnung eines benutzergelieferten Schlüssel-Wert-Paares,
eine Anfrage zum Abrufen eines benutzergelieferten Schlüssel-Wert-Paares,
eine Anfrage zum Löschen eines benutzergelieferten Schlüssel-Wert-Paares, oder
eine Anfrage zum Durchqueren von Schlüssel-Wert-Paaren, die im Blockchain-System gespeichert sind, und zum Aufzeichnen der benutzergelieferten Schlüssel-Wert-Paare.

12. Knoten (102-110) eines Blockchain-Systems (100), der so ausgebildet ist, dass er das Verfahren nach einem der Ansprüche 1 bis 11 durchführt.

13. Nicht-transitorisches computerlesbares Medium (206) mit darin gespeicherten Anweisungen, die, wenn sie von einem Prozessor (204) einer Vorrichtung (102-110, 200) ausgeführt werden, die Vorrichtung (102-110, 200) veranlassen, das Verfahren nach einem der Ansprüche 1 bis 11 durchzuführen.

## Revendications

1. Procédé (1000) exécuté par un nœud d'un système blockchain pour fournir une solution de stockage de données clé-valeur traversable afin de stocker des paires clé-valeur sur le système blockchain, ce procédé comprenant :
la réception (1002) d'une première paire clé-valeur fournie par l'utilisateur pour l'enregistrer sur le système blockchain, cette première paire clé-valeur fournie par l'utilisateur comprenant une première clé fournie par l'utilisateur et une première valeur fournie par l'utilisateur, la première clé fournie par l'utilisateur représentant un numéro de compte d'un premier compte d'un utilisateur et la première valeur fournie par l'utilisateur représentant un solde du premier compte de l'utilisateur ;
la génération d'une première paire clé-valeur d'un ensemble clé-valeur, cette première paire clé-valeur étant générée pour enregistrer la première paire clé-valeur fournie par l'utilisateur reçue, cette première paire clé-valeur ayant une clé comprenant la première clé fournie par l'utilisateur et une valeur comprenant la première valeur fournie par l'utilisateur, l'ensemble clé-valeur étant un ensemble de paires clé-valeur qui stockent une pluralité de paires clé-valeur fournies par l'utilisateur associées à une pluralité respective de comptes de l'utilisateur ;
l'attribution (1004) d'un premier indice à la première paire clé-valeur fournie par l'utilisateur ;
la génération (1006) d'une première paire clé-valeur indice-clé d'un ensemble indice-clé, cette première paire clé-valeur indice-clé ayant une clé comprenant le premier indice et une valeur comprenant la première clé fournie par l'utilisateur, l'ensemble indice-clé étant un ensemble de paires clé-valeur qui enregistrent des indices attribués à la pluralité de paires clé-valeur fournies par l'utilisateur ainsi que les clés fournies par l'utilisateur de la pluralité de paires clé-valeur fournies par l'utilisateur ;
la génération (1008) d'une première paire clé-valeur clé-indice d'un ensemble clé-indice, cette première paire clé-valeur clé-indice ayant une clé comprenant la première clé fournie par l'utilisateur et une valeur comprenant le premier indice, l'ensemble clé-indice étant un ensemble de paires clé-valeur qui enregistrent les clés fournies par l'utilisateur de la pluralité de paires clé-valeur fournies par l'utilisateur ainsi que les indices attribués à la pluralité de paires clé-valeur fournies par l'utilisateur, l'ensemble indice-clé et l'ensemble clé-indice formant ensemble un mappage bidirectionnel entre les clés fournies par l'utilisateur et leurs indices attribués ;
la clé contenue dans la première paire clé-valeur, la clé contenue dans la première paire clé-valeur indice-clé et la clé contenue dans la première paire clé-valeur clé-indice étant générées en utilisant des concaténations selon une règle de préfixe afin d'identifier de manière unique les paires clé-valeur stockées sur le système blockchain, cette règle de préfixe comprenant des spécifications d'un identifiant d'utilisateur et d'un indicateur de type comme préfixes dans chacune de la clé contenue dans la première paire clé-valeur, la clé contenue dans la première paire clé-valeur indice-clé et la clé contenue dans la paire clé-valeur clé-indice, l'identifiant d'utilisateur permettant de différentier des paires clé-valeur fournies par différents utilisateurs et l'indicateur de type indiquant si la paire clé-valeur associée à la clé appartient ou pas à l'ensemble clé-valeur, à l'ensemble indice-clé ou à l'ensemble clé-indice,
la clé contenue dans la première paire clé-valeur comprenant un premier identifiant d'utilisateur et un premier indicateur de type,
le premier identifiant d'utilisateur étant associé à l'utilisateur et le premier indicateur de type indiquant que la première paire clé-valeur appartient à l'ensemble clé-valeur,
la clé contenue dans la première paire clé-valeur indice-clé comprenant le premier identifiant d'utilisateur et un deuxième indicateur de type,
le deuxième indicateur de type indiquant que la première paire clé-valeur indice-clé est une paire clé-valeur générée par un système et appartient à l'ensemble indice-clé ; et
la clé contenue dans la première paire clé-valeur clé-indice comprenant le premier identifiant d'utilisateur et un troisième indicateur de type,
le troisième indicateur de type indiquant que la première paire clé-valeur indice-clé est une paire clé-valeur générée par le système et appartient à l'ensemble clé-indice, ce procédé comprenant en outre :
le stockage (1010) de la première paire clé-valeur, de la première paire clé-valeur indice-clé, et de la première paire clé-valeur clé-indice dans l'ensemble clé-valeur, l'ensemble indice-clé et l'ensemble clé-indice sur le système blockchain, respectivement ;
les indices attribués à la pluralité de paires clé-valeur fournies par l'utilisateur dans l'ensemble indice-clé étant numérotées séquentiellement et le système blockchain stockant en outre une paire clé-valeur enregistrant un indice de fin pour l'utilisateur, dont la valeur stocke la fin d'une séquence d'indexage comprenant les indices et permet de déterminer rapidement un nombre total de clés fournies par l'utilisateur indexées pour l'utilisateur.

2. Procédé selon la revendication 1, comprenant en outre :
la fourniture de la solution de stockage de données clé-valeur traversable comme une bibliothèque déployée sur le système blockchain ; et
la fourniture d'une interface de programmation pour recevoir une demande de données venant d'un contrat intelligent étant exécuté sur le système blockchain.

3. Procédé selon la revendication 1, dans lequel la clé de la paire clé-valeur enregistrant l'indice de fin compred le premier identifiant d'utilisateur comme préfixe.

4. Procédé selon l'une quelconque des revendications précédentes, comprenant en outre :
la réception d'une demande de traverser la pluralité de paires clé-valeur fournies par l'utilisateur stockées dans l'ensemble clé-valeur sur le système blockchain pour l'utilisateur ;
la détermination d'une liste des indices attribués à la pluralité de paires clé-valeur fournies par l'utilisateur, comprenant l'utilisation de l'indice de fin pour l'utilisateur stocké dans la paire clé-valeur enregistrant l'indice de fin pour l'utilisateur afin de déterminer un nombre total de clés fournies par l'utilisateur indexées pour l'utilisateur ;
la traversée des paires clé-valeur contenues dans l'ensemble indice-clé en se basant sur la liste d'indices afin d'obtenir une liste de clés fournies par l'utilisateur ; et
la traversée des paires clé-valeur contenues dans l'ensemble clé-valeur en se basant sur la liste obtenue de clés fournies par l'utilisateur.

5. Procédé selon l'une quelconque des revendications précédentes, ce procédé comprenant en outre :
la réception d'une demande d'enregistrer une deuxième paire clé-valeur fournie par l'utilisateur pour l'utilisateur pour l'enregistrement sur le système blockchain, cette deuxième paire clé-valeur fournie par l'utilisateur comprenant une deuxième clé fournie par l'utilisateur et une deuxième valeur fournie par l'utilisateur ;
la détermination de si n'importe quelle paire clé-valeur fournie par l'utilisateur stockée sur le système blockchain comprend ou pas une clé fournie par l'utilisateur correspondant à la deuxième clé fournie par l'utilisateur ; et
en réponse à une détermination qu'une paire clé-valeur particulière stockée sur le système blockchain comprend une clé fournie par l'utilisateur correspondant à la deuxième clé fournie par l'utilisateur, l'établissement de la deuxième valeur fournie par l'utilisateur comme la valeur pour la paire clé-valeur particulière.

6. Procédé selon la revendication 5, comprenant en outre :
en réponse à une détermination qu'aucune paire clé-valeur fournie par l'utilisateur stockée sur le système blockchain ne comprend une clé fournie par l'utilisateur correspondant à la deuxième clé fournie par l'utilisateur, le traitement de la deuxième paire clé-valeur fournie par l'utilisateur pour l'enregistrement sur le système blockchain.

7. Procédé selon la revendication 6, dans lequel le traitement de la deuxième paire clé-valeur fournie par l'utilisateur pour l'enregistrement sur le système de stockage comprend en outre :
la génération d'une deuxième paire clé-valeur de l'ensemble clé-valeur afin d'enregistrer la deuxième paire clé-valeur fournie par l'utilisateur reçue, cette deuxième paire clé-valeur ayant une clé comprenant la deuxième clé fournie par l'utilisateur et une valeur comprenant la deuxième valeur fournie par l'utilisateur ;
l'attribution d'un deuxième indice à la deuxième paire clé-valeur fournie par l'utilisateur ;
la génération d'une deuxième paire clé-valeur indice-clé de l'ensemble indice-clé, cette deuxième paire clé-valeur indice-clé ayant une clé comprenant le deuxième indice et une valeur comprenant la deuxième clé fournie par l'utilisateur ;
la génération d'une deuxième paire clé-valeur clé-indice de l'ensemble clé-indice, cette deuxième paire clé-valeur clé-indice ayant une clé comprenant la deuxième clé fournie par l'utilisateur et une valeur comprenant le deuxième indice ; et
le stockage de la deuxième nouvelle paire clé-valeur, de la deuxième paire clé-valeur indice-clé, et de la deuxième paire clé-valeur clé-indice dans l'ensemble clé-valeur, l'ensemble indice-clé et l'ensemble clé-indice sur le système blockchain, respectivement.

8. Procédé selon la revendication 7, dans lequel l'attribution d'un deuxième indice à la deuxième paire clé-valeur fournie par l'utilisateur comprend :
la détermination de l'indice à attribuer à la deuxième paire clé-valeur en se basant sur l'indice de fin enregistré dans la paire clé-valeur enregistrant l'indice de fin pour l'utilisateur,
l'augmentation séquentielle de l'indice de fin par un, et
l'attribution de l'indice augmenté à la deuxième paire clé-valeur fournie par l'utilisateur.

9. Procédé selon l'une quelconque des revendications précédentes, comprenant en outre :
la réception d'une demande de supprimer la première paire clé-valeur fournie par l'utilisateur ;
la détermination de si le premier indice attribué à la première paire clé-valeur fournie par l'utilisateur est à une fin de la séquence d'indexage utilisant l'indice de fin stocké dans la paire clé-valeur enregistrant l'indice de fin pour l'utilisateur ; et
en réponse à une détermination que le premier indice est à la fin de la séquence d'indexage, la suppression de la première paire clé-valeur, de la première paire clé-valeur indice-clé, et de la première paire clé-valeur clé-indice du système blockchain.

10. Procédé selon la revendication 9, comprenant en outre :
en réponse à une détermination que le premier indice n'est pas à la fin de la séquence d'indexage, la réorganisation de la séquence d'indexage,
la réorganisation de la séquence d'indexage comprenant en outre :
l'identification d'une paire clé-valeur indice-clé de remplacement, cette paire clé-valeur indice-clé de remplacement ayant été indexée à la fin de la séquence d'indexage ;
le remplacement de la valeur de la première paire clé-valeur indice-clé avec une valeur contenue dans la paire clé-valeur indice-clé de remplacement ;
l'identification d'une paire clé-valeur clé-indice de remplacement, cette paire clé-valeur clé-indice de remplacement ayant une clé comprenant la valeur contenue dans la paire clé-valeur indice-clé de remplacement ;
l'établissement du premier indice comme la valeur de la paire clé-valeur clé-indice de remplacement ; et
la suppression de la première paire clé-valeur, de la paire clé-valeur indice-clé de remplacement, et de la première paire clé-valeur clé-indice du système blockchain.

11. Procédé selon la revendication 2, dans lequel la demande de données comprend au moins une des demandes suivantes : une demande d'enregistrer une paire clé-valeur fournie par l'utilisateur, une demande de récupérer une paire clé-valeur fournie par l'utilisateur, une demande de supprimer une paire clé-valeur fournie par l'utilisateur, ou une demande de traverser des paires clé-valeur stockées sur le système blockchain enregistrant des paires clé-valeur fournies par l'utilisateur.

12. Nœud (102 - 110) d'un système blockchain (100) configuré de façon à exécuter le procédé selon l'une quelconque des revendications 1 à 11.

13. Support non transitoire lisible par ordinateur (206) ayant stockées sur lui des instructions qui, lorsqu'elles sont exécutées par un processeur (204) d'un dispositif (102 - 110, 200), font exécuter à ce dispositif (102 - 110, 200) le procédé selon l'une quelconque des revendications 1 à 11.
